(19) Europäisches Patentamt
European Patent Office
Office européen des brevets

(11) **EP 3 364 678 A1**

(12) **EUROPEAN PATENT APPLICATION**

(43) Date of publication:
**22.08.2018 Bulletin 2018/34**

(51) Int Cl.:
*H04W 12/02* (2009.01)    *H04L 1/00* (2006.01)
*H04L 27/34* (2006.01)

(21) Application number: **17156223.4**

(22) Date of filing: **15.02.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nokia Solutions and Networks Oy 02610 Espoo (FI)**

(72) Inventor: **WILD, Thorsten 70435 Stuttgart (DE)**

(74) Representative: **DREISS Patentanwälte PartG mbB Friedrichstraße 6 70174 Stuttgart (DE)**

Remarks:
Amended claims in accordance with Rule 137(2) EPC.

(54) **METHODS AND DEVICES FOR RADIO DATA TRANSMISSION**

(57)    The invention relates to a device (300) for and a method of transmitting data over a radio channel, the method comprising: mapping (310) at least one binary digit stream of the data to at least one data symbol stream by constellation mapping according to a first modulation scheme comprising quadrature amplitude modulation or phase-shift keying; modulating (320) at least one carrier signal according to a second modulation scheme comprising orthogonal frequency-division multiplexing of the at least one symbol stream; and modulating (330) a radio signal for the radio channel with the at least one carrier signal according to a third modulation scheme; wherein the method further comprises: determining (130) a property of the radio channel (100) from received training data; altering at least one of the first modulation scheme, the second modulation scheme and the third modulation scheme depending on information about the property of the radio channel in a predetermined way to form an altered radio signal including the data; and transmitting the altered radio signal over the radio channel. The invention further relates to a device (400) for and method of receiving data.

Fig. 2

**Description**

**Field of the invention**

The invention concerns methods and devices for radio data transmission, in particular a physical layer security technique exploiting a radio channel to make it more difficult for an illegitimate unauthorized receiver to decode signals intended to a legitimate receiver.

**Background**

Discriminatory channel estimation (DCE) is a strategy to enlarge the performance difference between a legitimate receiver (LR) and an unauthorized receiver (UR) in a multiple-input-multiple-output (MIMO) wireless system.

DCE aims at worsening the channel estimation for the UR by modifying training symbols. The paper "A Semiblind Two-Way Training Method for Discriminatory Channel Estimation in MIMO Systems" by Junjie Yang et. al. (IEEE Transactions on Communications, VOL. 62, No. 7, July 2014, pg. 2400 - 2410) discloses an exemplary DCE strategy.

The DCE strategy in this paper requires MIMO as prerequisite to transmit additional artificial noise on training signals which disappear in the receiver due to being radiated into a MIMO nullspace.

The paper "Physical layer security in wireless networks: a tutorial" by Y.S. Shiu et. al. (IEEE Wireless Communications, VOL. 18, No. 2, April 2011, pg. 66-74) discloses several methods for physical layer security based on MIMO.

For internet of things (IoT) applications a large number of devices need to be connected. Many of these IoT devices are low end devices that lack the complexity and/or the antennas to implement MIMO.

It is therefore desirable to implement physical layer security supporting in particular low end devices that for example are equipped with single antennas.

**Summary**

This goal is achieved by the methods and devices for wireless data transmission according to the independent claims.

Regarding the methods, a method of transmitting data over a radio channel comprises: mapping at least one binary digit stream of the data to at least one data symbol stream by constellation mapping according to a first modulation scheme comprising quadrature amplitude modulation or phase-shift keying;

modulating at least one carrier signal according to a second modulation scheme comprising orthogonal frequency-division multiplexing of the at least one symbol stream; and

modulating a radio signal for the radio channel with the at least one carrier signal according to a third modulation scheme; wherein the method further comprises:

> determining a property of the radio channel from received training data;
> altering at least one of the first modulation scheme, the second modulation scheme and the third modulation scheme depending on the information about the property of the radio channel in a predetermined way to form an altered radio signal including the data; and
> transmitting the altered radio signal over the radio channel.

Quadrature amplitude modulation (QAM) conveys data by changing some aspect of a carrier signal, usually a sinusoid, in response to a data signal. In the case of analog QAM, the amplitude of two waves of the same frequency, 90° out-of-phase with each other, hence in quadrature, are changed, i.e. modulated or keyed, to represent the data signal. Amplitude modulating two analog carriers in quadrature can be equivalently viewed as both amplitude modulating and phase modulating a single carrier. The term QAM is used also for any digital modulation scheme with a constellation diagram having constellation points arranged in a square grid with preferably equal vertical and horizontal spacing. Other configurations, e.g. Cross-QAM are also possible. Since in digital telecommunications the data is usually binary, a number of constellation points in the grid is usually a power of 2 (2, 4, 8, ...) each corresponding to a particular order of bits coding a data word of the length of the power. A constellation point corresponds to a symbol. A symbol is a waveform, a state or a significant condition of a radio channel that persists for a fixed period of time. For coding data words of lengths 4 bit, 8 bit or 16 bit the term QAM refers to 16-QAM, 64-QAM and 256-QAM respectively. By moving to a higher-order constellation, e.g. 1024-QAM or 4096-QAM, it is possible to transmit more bits per symbol. In the context of this description, QAM refers to such constellations as well.

Orthogonal frequency-division multiplexing (OFDM) is a frequency-division multiplexing (FDM) scheme used as a digital multi-carrier modulation method. A plurality of orthogonal sub-carrier signals is used to carry the data on several parallel data streams or channels. Each sub-carrier is modulated with a conventional modulation scheme such as quadrature amplitude modulation or phase-shift keying. The actual data transmission may be modified by modifying the mapping of the binary digit stream to the data symbols or by changing the modulation of the carrier signal or the radio signal in a radio channel dependent way. The property of the radio channel is only known to the sender and a LR with sufficient accuracy. The sender can hence send data to the LR knowing that the LR will be able to retrieve the data in a meaningful way with sufficient reliability. Since an illegitimate UR is unaware of the property of the radio channel, it will be unable to undo the alteration made to the transmitted radio signal, and thus more difficult to decode the radio signal intended for the LR. The property of the radio channel may be or may relate to a channel transfer function.

In some embodiments, altering at least one of the second modulation scheme and the third modulation scheme comprises changing a phase and/or an amplitude of the carrier signal or of the radio signal respectively depending on the information about the property of the radio channel. If the property of the radio channel corresponds to its channel transfer function, the phase and/or the amplitude may be changed depending on the channel transfer function.

In some embodiments, the first modulation scheme comprises mapping sub-sets of the binary digit stream of the data to a plurality of data symbol streams by a modulation constellation to form sub-carriers, and combining the sub-carriers to form the carrier signal. In such embodiment, altering the first modulation scheme may comprise altering at least one parameter of the modulation constellation in the mapping for at least one of the plurality of sub-carriers depending on the information about the property of the radio channel. The phase-shift keying constellation maps for example in quadrature phase-shift keying a set of two bits of the binary digit stream to one of four phases. The quadrature amplitude modulation maps for example in 16 quadrature amplitude modulation a set of four bits of the binary digit stream to one of four phases. In this case for example the phase or amplitude to which a set of two bits or four bits is mapped respectively is altered depending on the property of the radio channel, e.g. an estimated channel transfer function. For example, a vector of modulation symbols of the respective modulation constellation is modified by a diagonal phase rotation matrix having elements corresponding to the property of the radio channel, e.g. an estimated channel transfer function.

In some embodiments, the modulation constellation is altered by changing the at least one mapping depending on an absolute squared amplitude response of a channel transfer function of the at least one of the plurality of sub-carriers. This means that the phase or amplitude is changed for an individual sub-carrier depending on the estimated power of the channel transfer function for the individual sub-carrier. The power may be estimated during a training exchange for setting up the radio channel.

In some embodiments, at least one radio resource is allocated for the carrier signal and/or for the radio signal, wherein the radio resource is allocated depending on the information about the property of the radio channel. This way all radio resources or only a sub-set of all radio resources may be used. The choice of the sub-set depends on the information about the property of the channel and is hence only known at the sender of the data and the LR.

In some embodiments, altering at least one of the first modulation scheme and the second modulation scheme comprises changing a bit assignment for the mapping of the at least one binary digit stream of data to the at least one data symbol stream according to the first modulation scheme and for modulating the at least one carrier signal according to the second modulation scheme respectively depending on the information about the property of the radio channel. This way a channel-adaptive bit loading may be implemented by an adaptive modulation without indicating the bit assignment. In an orthogonal frequency division multiplexing (OFDM) with a plurality of sub-carriers, an adaptive modulation per OFDM sub-carrier may be implemented.

Furthermore, regarding the methods, a method of receiving data in a radio channel comprises:

demodulating a radio signal in a radio channel according to a first demodulation scheme to form at least one carrier signal;
demodulating the at least one carrier signal according to a second demodulation scheme for detecting symbols of an orthogonal frequency-division multiplexed signal to form at least one data symbol stream;
mapping the at least one data symbol stream to at least one binary digit stream of the data by symbol detection according to a third demodulation scheme comprising quadrature amplitude modulated or phase-shift keying; wherein the method further comprises:

determining a property of the radio channel from received training data; and
altering at least one of the first demodulation scheme, the second demodulation scheme and the third demodulation scheme depending on information about the property of the radio channel in a predetermined way.

This way a corresponding altered radio signal is reliably received by modifying the mapping of the data symbols to the binary digit stream or by changing the demodulation of the carrier signal or the radio signal in a radio channel dependent way. The radio channel is only known to the sender and the legitimate receiver. This physical layer security technique makes it possible for the LR to receive the signal.

The information about the property of the radio channel may for example be an estimate of a radio channel transfer function of the radio channel between the sender and the LR.

In some embodiments, altering at least one of the second demodulation scheme and the third demodulation scheme comprises changing a phase and/or an amplitude for demodulating the carrier signal or the radio signal respectively depending on the information about the property of the radio channel.

In some embodiments, a plurality of sub-carriers is determined from the carrier signal, the plurality of data symbol streams are mapped to sub-sets of the binary digit stream of the data by a symbol detection constellation from the plurality of sub-carriers, and at least one parameter of the symbol detection constellation is altered in the mapping for at least one of the plurality of sub-carriers depending on the information about the property of the radio channel. The phase-shift keying constellation maps for example in quadrature phase-shift keying one of four phases to a set of two bits of the binary digit stream. The quadrature amplitude modulation maps for example in 16 quadrature amplitude modulation one of four phases to a set of four bits of the binary digit stream. In this case for example the phase or amplitude to which a set of two bits or four bits maps respectively is altered depending on the property of the radio channel, e.g. an estimated channel transfer function. For example, a vector of detection symbols of the respective modulation constellation is modified by a diagonal phase rotation matrix having elements corresponding to the property of the radio channel, e.g. an estimated channel transfer function.

In some embodiments, the symbol detection constellation is altered by changing the at least one mapping depending on an absolute squared amplitude response of a channel transfer function of the at least one of the plurality of sub-carriers. This means that the phase or amplitude is changed for an individual sub-carrier depending on the estimated power of the channel transfer function for the individual sub-carrier. The power may be estimated during training data exchange.

In some embodiments, at least one radio resource is allocated for the carrier signal and/or for the radio signal, wherein the radio resource is allocated depending on the information about the property of the radio channel. This way all radio resources or only a sub-set of all available radio resources may be used. The choice of the sub-set depends on the information about the property of the radio channel and is hence only known at the sender of the data and the LR. In some further embodiments, dummy symbols, i.e. randomly chosen modulation symbols, may be transmitted at remaining resources to further obscure data being transmitted.

In some embodiments, altering at least one of the first demodulation scheme and the second demodulation scheme comprises changing a bit assignment for the mapping of the at least one data symbol stream to the at least one binary digit stream of data according to the third demodulation scheme and for demodulating the at least one carrier signal according to the second demodulation scheme respectively depending on the information about the property of the radio channel. This way a channel-adaptive bit loading is implemented by an adaptive demodulation without indicating the bit assignment. In an orthogonal frequency division multiplexing (OFDM) with a plurality of sub-carriers, an adaptive demodulation per OFDM sub-carrier may be implemented.

Regarding the devices, a device for transmitting data in a radio channel comprises a processor, a memory and a transmitter, wherein the device is adapted for:

mapping at least one binary digit stream of the data to at least one data symbol stream by constellation mapping according to a first modulation scheme comprising quadrature amplitude modulation or phase-shift keying;
modulating at least one carrier signal according to a second modulation scheme comprising orthogonal frequency-division multiplexing of the at least one symbol stream; and
modulating a radio signal in a second radio channel with the at least one carrier signal according to a third modulation scheme;
wherein the device is further configured to:

determine a property of the radio channel from received training data;
alter at least one of the first modulation scheme, the second modulation scheme, and the third modulation scheme depending on information about the property of the radio channel in a predetermined way to form an altered radio signal including the data; and
transmit the altered radio signal over the radio channel.

In some embodiments, the device is configured to alter at least one of the second modulation scheme and the third modulation scheme by changing a phase and/or an amplitude of the carrier signal or of the radio signal respectively depending on the information about the property of the radio channel.

In some embodiments, the first modulation scheme comprises mapping sub-sets of the binary digit stream of the data to a plurality of data symbol streams by a modulation constellation to form sub-carriers, and combining the sub-carriers to form the carrier signal, and the device is further configured to alter the first modulation scheme by altering at least one parameter of the modulation constellation in the mapping for at least one of the plurality of sub-carriers depending on the information about the property of the radio channel.

In some embodiments, the device is adapted to alter the modulation constellation by changing the at least one mapping depending on an absolute squared amplitude response of a channel transfer function of the at least one of the plurality of sub-carriers.

In some embodiments, the device is adapted to allocate at least one radio resource for the carrier signal and/or for the radio signal, wherein the radio resource is allocated depending on the information about the property of the radio channel.

In some embodiments, the device is adapted to change a bit assignment for the mapping of the at least one binary digit stream of data to the at least one data symbol stream according to the first modulation scheme and/or for modulating the at least one carrier signal according to the second modulation scheme depending on the information about the property of the radio channel.

Furthermore, regarding the devices, a device for receiving data over a radio channel comprises a processor, a memory and a receiver, wherein the device is adapted for: Receiving a radio signal over the radio channel; demodulating the radio signal according to a first demodulation scheme to form at least one carrier signal;

demodulating the at least one carrier signal according to a second demodulation scheme comprising orthogonal frequency-division multiplexing to form at least one data symbol stream; and

mapping the at least one data symbol stream to at least one binary digit stream of the data by symbol detection according to a third demodulation scheme comprising quadrature amplitude modulation or phase-shift keying;

wherein the device is further configured to:

determine a property of the radio channel from received training data; and
alter at least one of the first demodulation scheme, the second demodulation scheme and the third demodulation scheme depending on information about the property of the radio channel in a predetermined way.

Preferably, the device further comprises a transmitter and is further configured to send training data to a remote device responsible for sending the received radio signal, the training data enabling the remote device to determine information about a property of the radio channel.

In some embodiments, the device is adapted to change a phase and/or an amplitude depending on the information about the property of the radio channel for demodulating the carrier signal or the radio signal.

In some embodiments, the device is adapted to determine a plurality of sub-carriers from the carrier signal, to map a plurality of data symbol streams to sub-sets of the binary digit stream of the data by a symbol detection constellation from the plurality of sub-carriers, and to alter at least one parameter of the symbol detection constellation in the mapping for at least one of the plurality of sub-carriers depending on the information about the property of the radio channel.

In some embodiments, the device is adapted to alter the symbol detection constellation by changing the at least one mapping depending on an absolute squared amplitude response of a channel transfer function of the at least one of the plurality of sub-carriers.

In some embodiments, the device is adapted to allocate at least one radio resource for the carrier signal and/or for the radio signal, wherein the radio resource is allocated depending on the information about the property of the radio channel.

In some embodiments, the device is adapted to change a bit assignment for the mapping of the at least one data symbol stream to the at least one binary digit stream of data according to the third demodulation scheme and/or for demodulating the at least one carrier signal according to the second demodulation scheme depending on the information about the property of the radio channel.

Further embodiments of the invention can be gathered from the dependent claims and the following description.

**Brief description of the figures**

Fig. 1 depicts a simplified block diagram of a multi-antenna transmit and receive chain;
Fig. 2 schematically depicts a sequence diagram for methods of radio data transmission;
Fig. 3 schematically depicts modulation steps before transmitting of data over a radio channel;
Fig. 4 schematically depicts demodulation steps upon receiving of transmitted data over a radio channel;
Fig. 5 schematically depicts parts of devices for radio data transmission.

**Description of the embodiments**

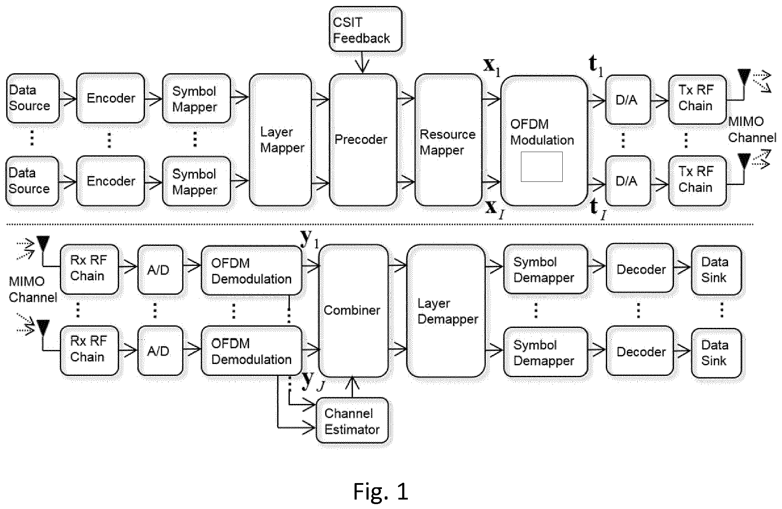

Fig. 1 depicts a simplified block diagram of a multi-antenna transmit and receive chain. Such transmit and receive chain is known, and may serve as a basis for embodiments of the invention. It must be understood that, although Fig. 1 relates to a multiple-input multiple-output (MIMO) system, embodiments of the invention are not limited to such communication system.

As depicted in Fig. 1, within the transmitter chain, information bits provided for transmission by one or more data sources are segmented/concatenated and encoded by corresponding channel encoders. Such encoders may e.g. use one or more of Turbo codes, convolutional codes or low density parity check codes. Redundancy may be added for error protection. To ensure knowledge about correct reception, cyclic redundancy check (CRC) bits may be added. The bits are then mapped to modulation symbols. For this mapping an appropriate modulation and coding scheme (MCS) may be chosen, e.g. quadrature amplitude modulation (QAM) or phase-shift keying (PSK). Such choice is typically based on radio channel conditions, which may be obtained using feedback information, for example a channel quality indicator.

Since system depicted in Fig. 1 relates to MIMO there can be several data streams, also referred to as so-called spatial layers, in parallel, exploiting spatial multiplexing capabilities. Spatial transmit processing includes layer mapping, precoding and mapping to radio resources. For a non-MIMO system, the layer mapping is typically excluded from the transmit chain. Usually, spatial processing makes use of the available channel state information at the transmitter (CSIT), e.g. obtained via feedback signalling.

The system depicted in Fig. 1 uses orthogonal frequency division multiplexing (OFDM), which is used as a basis in many communications systems, such as Long Term Evolution (LTE) and many IEEE 802.11 standards. In an OFDM system, the modulation symbols X resulting from the preceding processing steps are mapped to orthogonal subcarriers, which allows for flexible support of multiple-access and e.g. frequency-selective scheduling. With a fast inverse Fourier transform (IFFT), time domain signal samples of all superimposed subcarriers may be generated. A cyclic prefix (CP) may be added to prevent, or at least sufficiently reduce, inter-symbol and inter-carrier interference, ISI and ICI respectively, in the presence of multipath propagation.

The next processing steps are digital-to-analog (D/A) conversion and up-conversion to a radio carrier frequency (RF) using local oscillators and mixers (sometimes using intermediate frequencies (IF)). Filtering and matching is done as well. Up-conversion, filtering and matching are denoted in Fig. 1 as Tx RF Chain. Finally, the analog RF signal is fed into an antenna network.

The analog RF signal is now transmitted by electromagnetic waves via a radio channel to a receiver chain.

An example of a receiver chain is schematically depicted in Fig. 1 as well. After RF processing and A/D conversion, OFDM demodulation is done by discarding a cyclic prefix, if present, and performing an FFT. Based on channel estimation, e.g. obtained by using training or reference symbols, MIMO spatial receive processing can occur, e.g. by using a linear receive combiner as depicted in Fig. 1 in combination with a layer demapper. Finally, for each spatial layer, symbol demapping and decoding is performed to obtain the data that may be forwarded to a suitable data sink.

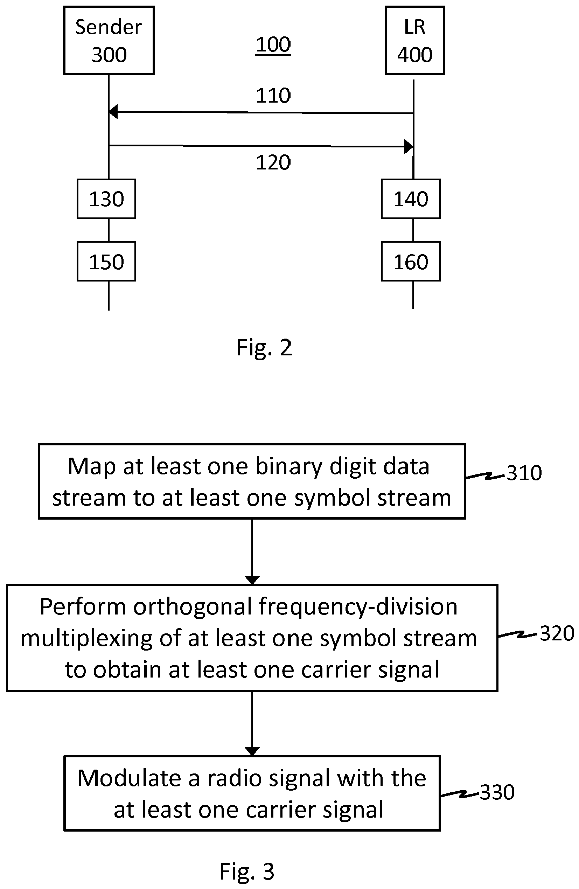

Fig. 2 depicts schematically a sequence diagram for methods of radio data transmission from a device 300 for transmitting data to a device 400 for receiving the over a radio channel 100. The device 300 for transmitting data is hereinafter referred to as sender. The device 400 for receiving data is hereinafter referred to as legitimate receiver, LR. The aim of the methods described below is to transmit data from the sender to the LR while preventing an unauthorized receiver, UR, from intercepting the data. This aim is achieved by means of application of a physical layer security technique.

The basic waveform of a radio signal transmitted through the radio channel may be according to orthogonal frequency division multiplexing, OFDM, e.g. Cyclic Prefix OFDM (CP-OFDM), Zero Prefix OFDM (ZP-OFDM) or any windowed or filtered variant of it, such as Universal Filtered OFDM (UF-OFDM), Weighted Overlap and Add (WOLA) or filtered OFDM (f-OFDM). In general, the extent of alterations of the modulation may depend on the signal to interference plus noise ratio, SINR, operation point and the magnitude of any channel estimation errors, to be expected from system design.

Before initiation of data transmission, training data is exchanged between the sender 300 and the LR 400 to know, i.e. to obtain a sufficient estimate of, the radio channel 100. For that purpose, the sender receives first training data over the radio channel 100 from the LR 400 (denoted by arrow 110 in Fig. 2). Similarly, second training data are transmitted over the radio channel 100 from the sender 300 to the LR 400 (denoted by arrow 120 in Fig. 2). Note that the second training data can be sent along with data to be transmitted.

If the sender 300 corresponds to a radio access node, such as a base station, e.g. an evolved NodeB in 3GPP Long Term Evolution (LTE), and the LR 400 corresponds to a User Equipment (UE), the first training data are transmitted in uplink, and the second training data are transmitted in downlink over the radio channel 100 respectively. Similarly, if the sender 300 corresponds to an UE, and the LR 400 corresponds to a radio access node, the first training data are transmitted in downlink, and the second training data are transmitted in uplink over the radio channel 100 respectively.

Based on the received training data, the sender 300 (action 130 in Fig. 2) and the LR 400 (action 140 in Fig. 2) determine information about a property of the radio channel 100. The sender 300 and the LR 400 thus assume that such property of the radio channel, e.g. an estimated channel transfer function of the radio channel, is substantially reciprocal. That is, the radio channel 100, and thus the determined property, is considered to be substantially identical in both uplink and downlink direction, which is typically the case in a Time Division Duplex (TDD) communication system.

To compensate for variation of the property of the radio channel over time, training data exchange as described above may be performed on a sufficiently regular basis.

As will be understood by a person of skill in the art, the exchange of channel training data is executed after proper calibration is ensured. Such calibration allows for compensation of channel influences of RF hardware involved at both sender 300 and LR 400. For example, the involved RF hardware including power amplifier at the sender 300 and low noise amplifier at the LR 400 is typically different depending on the link direction. Techniques for over-the-air-calibration and/or calibration involving additional calibration devices are well known in the art. The remainder of the description describes embodiments in which a proper calibration is assumed.

In case of uplink transmission of training data, sounding reference symbols (SRS) according to the long-term evolution, LTE, Release 8 or later may be used. In case of downlink transmission of training data the channel state information reference symbols (CSI-RS), cell specific reference symbols (CRS) or demodulation reference symbols (DMRS) according to the long-term evolution, LTE, Release 8 or later may be used.

Hereinafter, embodiments of the invention will be discussed with a radio channel transfer function as an example of information about the property of the radio channel.

As mentioned above, suitable reference symbols may be used as training data, which reference symbols typically form reference sequences known to the sender 300 and LR 400. Based on these known reference sequences, the time-dependent complex-valued frequency-selective channel transfer function h for M used sub-carriers may be expressed as:

$$\mathbf{h} = \begin{bmatrix} h_1 & h_2 & \dots & h_M \end{bmatrix}^T \tag{1}$$

The first channel transfer function estimated by the sender 300 is denoted using index A, resulting in:

$$\hat{\mathbf{h}}_A = \begin{bmatrix} \hat{h}_{A,1} & \hat{h}_{A,2} & \dots & \hat{h}_{A,M} \end{bmatrix}^T \tag{2}$$

The second channel transfer function estimated by the LR 400 is denoted using index B, resulting in:

$$\hat{\mathbf{h}}_B = \begin{bmatrix} \hat{h}_{B,1} & \hat{h}_{B,2} & \dots & \hat{h}_{B,M} \end{bmatrix}^T \tag{3}$$

It is preferable that the downlink and uplink training happens with as few time distance between each other as possible. As the respective training data receiver in the sender 300 and the LR 400 is aware of the time mismatch between downlink and uplink training, it can use channel prediction and extrapolation techniques, like linear prediction, Wiener prediction, Kalman filtering for predicting the channel such that the resulting channel estimation difference $\hat{\mathbf{h}}_A$ to $\hat{\mathbf{h}}_B$ is minimized, e.g. in terms of mean squared error, MSE.

Further information exchange may be the explicit signaling of channel quality (CQI) or signal to interference plus noise ratio (SINR), as the interference situation at both ends of the link is not symmetric.

Afterwards, at least one radio resource is allocated for at least one carrier signal and/or for a radio signal, to establish transmission through the radio channel 100. Typically, such resource allocation is performed at the network side of the radio channel, for example in a base station. If such base station is the sender 300, resource allocation occurs then thus occurs in the sender (denoted as action 150 in Fig. 2). If such base station is the LR 400, resource allocation may thus be performed in the LR (denoted as action 160 in Fig. 2)and signalled to the UE, e.g. by inclusion in a so-called scheduling grant...

Before transmitting the data, as schematically depicted in Fig. 3, the following modulation steps are executed at the sender 300 repeatedly.

In a step 310 at least one binary digit stream of the data is mapped to at least one data symbol stream by constellation mapping according to a first modulation scheme comprising quadrature amplitude modulation or phase-shift keying. The first modulation scheme may be performed in a symbol mapper, for example a symbol mapper as depicted in Fig. 1.

Afterwards, in a step 320 at least one carrier signal is modulated according to a second modulation scheme comprising orthogonal frequency-division multiplexing of the at least one symbol stream. An exemplary location for performance of the second modulation scheme within a transmit chain is represented by the block OFDM Modulation depicted in Fig. 1.

Afterwards, in a step 330 the radio signal is modulated according to a third modulation scheme with the at least one carrier signal. Within the exemplary transmit chain depicted in Fig. 1, the third modulation scheme may be executed in the block denoted as Tx RF Chain.

In embodiments of the invention, any modulation of the modulation schemes, e.g. quadrature amplitude modulation, phase-shift keying modulation, orthogonal frequency-division multiplexing and the modulation of the radio signal may be altered depending on information about a property of a radio channel established for transmitting the data. In the example described below, the channel transfer function $\hat{\mathbf{h}}_A$, i.e. a channel transfer function estimated based on received at the sender 300, is used as the property of the radio channel 100 onto which altering depends.. The information about the property of the radio channel may be provided as an input for the respective modulation schemes in a similar fashion as the CSIT Feedback is input for the precoder in the transmit chain depicted in Fig. 1.

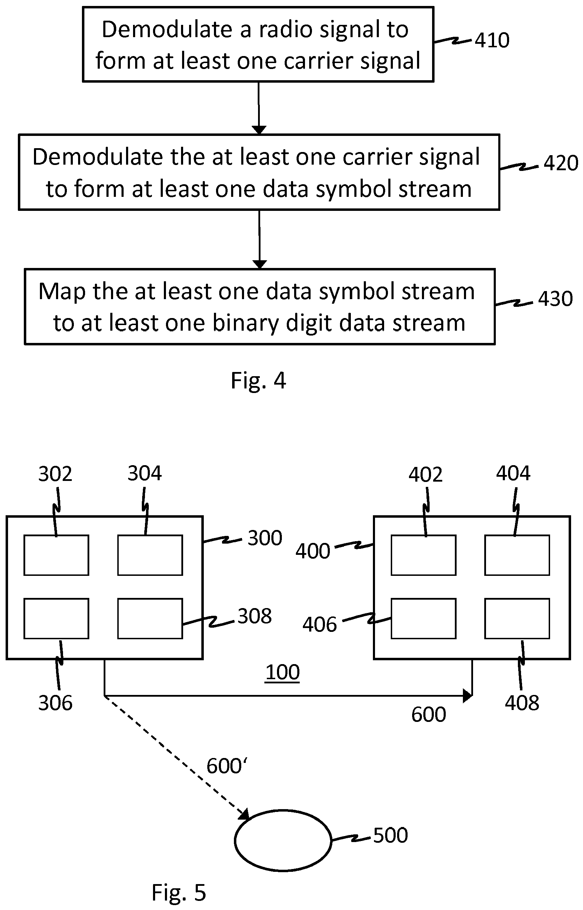

Upon receipt of the data, as schematically depicted in Fig. 4, the following steps are executed at the LR 400 repeatedly.

In a step 410 the radio signal is demodulated according to a first demodulation scheme to form at least one carrier signal. Within the exemplary receiver chain depicted in Fig. 1, the first demodulation scheme may be executed in the block denoted as Rx RF Chain.

Afterwards in a step 420 the at least one carrier signal is demodulated according to a second demodulation scheme to form at least one data symbol stream. An exemplary location for performance of the second demodulation scheme within a receiver chain is represented by the block OFDM Demodulation depicted in Fig. 1.

Afterwards in a step 430 the at least one data symbol stream is mapped to at least one binary digit stream of the data according to a third demodulation scheme comprising symbol detection according to quadrature amplitude modulation or phase-shift keying. Within the exemplary receiver chain depicted in Fig. 1, the third demodulation scheme may be executed in the block denoted as Symbol Demapper.

In embodiments of the invention, any used demodulation of the demodulation schemes, e.g. the demodulation according to the quadrature amplitude modulation scheme, the phase-shift keying modulation scheme, the orthogonal frequency-division multiplexing scheme and the demodulation of the radio signal may be altered depending on the information about the property of the radio channel established for receiving the data. In the example regarding altered demodulation that will be discussed in more detail below, the channel transfer function $\hat{\mathbf{h}}_B$, i.e. a channel transfer function estimated based on received training data at the LR 400, is used as the property of the radio channel 100 onto which altering depends.

Optionally a phase and/or an amplitude of the carrier signal or of the radio signal are changed depending on the information about the property of the radio channel. In this case the modulation and demodulation is adjusted.

Optionally sub-sets of the binary digit stream of the data are mapped to the plurality of data symbol streams by a phase-shift keying modulation constellation or by a quadrature amplitude modulation constellation to form sub-carriers. In this case the sub-carriers are combined to form the carrier signal. At least one parameter of the phase-shift keying modulation constellation or of the quadrature amplitude modulation constellation is in this case altered in the mapping for at least one of the plurality of sub-carriers depending on the information about the property of the radio channel for the sub-carrier. In this case a plurality of sub-carriers is determined from the received carrier signal. This results in the plurality of data symbol streams that are mapped to sub-sets of the binary digit stream of the data by a phase-shift keying symbol detection constellation or by a quadrature amplitude symbol detection constellation from the plurality of sub-carriers. At least one parameter of the phase-shift keying symbol detection constellation or of the quadrature amplitude symbol detection constellation is altered in the mapping for at least one of the plurality of sub-carriers depending on the information about the property of the radio channel. This means that while transmitting the data the symbol detection constellation is altered synchronously with the altering of the modulation constellation..

Optionally the phase-shift keying modulation constellation or the quadrature amplitude modulation constellation is altered by changing the at least one mapping depending on an absolute squared amplitude response $|h_k|^2$ of a channel transfer function of the at least one of the plurality of sub-carriers. In this case the phase-shift keying symbol detection constellation or the quadrature amplitude symbol detection constellation is altered by changing the at least one mapping depending on an absolute squared amplitude response $|h_k|^2$ of a channel transfer function of the same at least one of the plurality of sub-carriers. This is described below in further detail.

Optionally a bit assignment for any of the used modulation schemes, e.g. the modulation of the mapping of the at least one binary digit stream of data to the at least one data symbol stream according to the quadrature amplitude modulation or according to the phase-shift keying and/or for modulating the at least one carrier signal according to the orthogonal frequency-division multiplexing to form the at least one symbol stream, is changed depending on the information about the property of the radio channel. In this case also a bit assignment for the mapping of any of the used demodulation scheme, e.g. the demodulation of the at least one data symbol stream to the at least one binary digit stream of data according to the quadrature amplitude modulation or according to the phase-shift keying and/or for demodulating the at least one carrier signal according to the orthogonal frequency-division multiplexing to form the at least one symbol stream is changed depending on the information about the property of the radio channel.

Fig. 5 schematically depicts parts of the device 300 for transmitting data, i.e. sender 300 in Fig. 2, the device 400 for receiving data, i.e. LR 400 in Fig. 2, and an unauthorized device 500, also referred to as unauthorized receiver UR 500, in a network for radio data transmission. If the sender 300 transmits data to the LR 400 in a radio signal 600, the UR 500 should be prevented to be able to eavesdrop based on interception of the radio signal 600.

Embodiments of the invention see to alteration of one or more modulation techniques for forming the radio signal 600 in a predetermined way based on information of a property of the radio channel 100 known to both sender 300 and LR 400. Due to this knowledge, the LR 400 can undo the altered modulation. The predetermined way may be preconfigured using proprietary implementation and/or signalling. Alternatively, the way in which alteration occurs may be standardized. The UR 500 can only intercept the radio signal 600 with (slightly) different properties, i.e. as radio signal 600' due to a (slightly) different radio channel. As a result, although the UR 500 may be knowledgeable about the way alteration occurs, e.g. in case of standardization, the UR 500 is unable to obtain the information of the property of the radio channel 600 required to undo the altered modulation, and thus unable to eavesdrop. Since the alteration is based information on the property of radio channel 100, and the UR 500 is unaware of this information, undoing the alteration is impossible.

The device 300 for transmitting data comprises a processor 302, a memory 304, a transmitter 306, and a receiver 308.

The device 300 for transmitting data is adapted for executing the aforementioned steps to operate as sender to transmit data to the device 400 for receiving data, referred to as LR.

The LR 400 comprises a processor 402, memory 404, a receiver 406 and a transmitter 408.

The LR 400 is adapted for executing the aforementioned steps to operate as receiver for data transmitted by the device 300 for transmitting data.

The devices may be adapted to operate in two modes, i.e. as sender and LR respectively. In any case the physical layer of the devices is adapted to implement the physical layer security technique described above.

Further embodiments of the proposed physical layer security technique are described below. It will be understood that these embodiments are not meant to limit the invention, and that several embodiments may be combined.

1. Channel-dependent phase rotations

In quadrature amplitude modulation QAM, e.g. with quadrature phase-shift keying QPSK, or 16-QAM, modulation symbols $\mathbf{s} = [s_1\ s_2\ \cdots\ s_M]^T$ are mapped onto different subcarriers, e.g. different QAM symbols.

Accordingly, the phase may be altered by phase-rotation to determine altered symbols $\tilde{\mathbf{s}}$, based on parameters of the measured channel:

$$\tilde{\mathbf{s}} = \mathbf{Ds}, \tag{4}$$

with D being a diagonal phase rotation matrix and with D being a function of the channel transfer function, i.e.:

$$\mathbf{D} = \left(\exp(j\varphi_1)\quad \exp(j\varphi_2)\quad ...\quad \exp(j\varphi_M)\right) = f(\mathbf{h}) \tag{5}$$

In the previously described modulation and demodulation example, the estimate of the channel transfer function, i.e. the channel transfer function $\hat{\mathbf{h}}_A$ and the channel transfer function $\hat{\mathbf{h}}_B$ are substituted for h in aforementioned equation respectively.

For each subcarrier the absolute squared amplitude response, thus the power of the channel transfer function $|h_k|^2$ is estimated from the training symbol exchange and then considered.

For a certain subcarrier for each dB below the maximum value of the channel transfer function power across all subcarriers, the phase of the modulation symbol is thereby rotated by $\varphi$.

For example, with $\varphi=10°$ per dB, when the channel transfer function power deviates by 5 dB from the maximum, a QPSK symbol already is rotated into the quadrant of the neighbour constellation point.

Even in the absence of noise the corresponding signal will be demodulated incorrectly in case the receiver is not aware of the actual channel transfer function between the device 300 for transmitting data and the device 400 for receiving data.

As the receiver 406 at the LR 400 uses the estimated channel transfer function $\hat{\mathbf{h}}_B$, which is substantially the same as the estimated channel transfer function $\hat{\mathbf{h}}_A$ used by the sender 306 at the device 300 for transmitting data, the phase rotation can be removed from the signal.

Additionally, a certain error tolerance is built in, because a minor mismatch caused by different estimations will cause only a minor phase rotation difference. For example, with 1 dB difference there is a rotation by $\varphi=10°$ which still

allows for successful demodulation, in particular in case of 16 QAM or QPSK.

Preferably this phase rotation is only applied to data symbols and not to any embedded pilot symbols, so that any eavesdropper, e.g. device 500 in Fig. 3, cannot recover the effect from its own channel estimation.

Furthermore, to limit the effect of channel estimation errors, which are typically higher on subcarriers with lower SINR, the overall phase rotation may be capped, e.g. to 180°, in case the absolute value of the channel transfer function goes below a certain threshold below its maximum value. E.g. when with φ=10° per dB, the phase rotation is fixed to -180° for all subcarriers with values of the channel transfer function which are less than 18dB below the maximum channel transfer function.

2. Channel-dependent amplitude variations

The absolute value of the channel transfer function can also be used for channel-dependent amplitude variations.

For example, when M modulation symbols $\mathbf{s} = [s_1 \ s_2 \ \cdots \ s_M]^T$ are mapped onto M different subcarriers the amplitude A may be altered by transmitting altered symbols:

$$\widetilde{\mathbf{s}} = \mathbf{As} \tag{6}$$

with a diagonal amplitude matrix A having M elements Ak that is a function of the channel transfer function:

$$\mathbf{A} = \begin{pmatrix} A_1 & A_2 & ... & A_M \end{pmatrix} = f(\mathbf{h}) \tag{7}$$

In the modulation and demodulation example discussed previously, the estimate of the channel transfer function, i.e. the channel transfer function $\hat{\boldsymbol{h}}_A$ and the channel transfer function $\hat{\boldsymbol{h}}_B$ are substituted for h respectively in aforementioned equation as described above.

Reverse waterfilling power loading according to T. Cover, J. Thomas, "Elements of Information Theory", Wiley, 2nd edition, chapter 9.4 may be applied which is optimal in an information theoretic sense for maximizing the spectral efficiency for the transmission. Here, the signalled SINR or CQI is used and the OFDM modulation is treated as independent parallel Gaussian channels.

This has the advantage that the physical layer security technique doesn't result in a drawback on the spectral efficiency side.

Preferably, the actual channel-dependent power loading is not signalled from the device 300 for transmitting data to the LR 400. Instead, the channel estimate and the signalled CQI / SINR are the input at the LR 400 to carry out the same waterfilling operation.

As the used amplitude variation is not signalled explicitly but known implicitly at both ends of the link via the training exchange, equalization errors will occur at the eavesdropper. In case of higher order modulation, e.g. 16-QAM, 64-QAM, this will lead to wrongly demodulated symbols.

When less amplitude variation is desired another option is to carry out a mismatched reverse waterfilling by treating the SINR by e.g. 10 dB higher than it actually is. This will more obscure the amplitude variation, firstly preventing an eavesdropper from trying to estimate it and secondly making the transmission from the device 300 for sending data to the LR 400 less vulnerable to channel estimation errors in the training exchange.

In general power allocation may lead to completely unused subcarriers. This may either be accepted or dummy signals may be transmitted on those subcarriers as described in 4) below in order to further obfuscate the actual information transmission.

Another simple example of amplitude variation is to use smaller variations depending on the channel powers including a modulo function. E.g. the following amplitude variation may be carried out:

$$A_k = \sqrt{0.1 \cdot \left( \left[ 10 + \text{round}(10(|h_k|^2 - \frac{1}{K}\sum_{j=1}^{K}|h_j|^2)) \right] \mod 20 \right)} \tag{8}$$

This way the differences of the channel power of a certain subcarrier k to the average power of all subcarriers is taken as element Ak in the amplitude matrix A for the subcarrier k. This value is quantized and mapped by a modulo operation to output values {0.1,0.2,0.3,...,1.9}.

Another mapping function, in this case the square root, is used to convert it into a reasonable amplitude variation. The square root here has been chosen as it reduces the overall amplitude variation to {0.31,...,1.41} to provide a soft degradation.

3) Subset resource usage combined with sorting and dummy signals

In this embodiment, only a subset K of the available M subcarriers is used for transmission of the data. The data, i.e. the actual information content, is coded as information bits in code blocks that resemble sub-sets of data of the at least one binary data stream. In the example a serial data stream delivering the actual information content is parallelized into the plurality of binary data streams which are then mapped to individual subcarriers at the device 300 for sending the data.

For example, the K subcarriers with the strongest values for the estimated channel transfer function are used to carry information.

In order to prevent that a single deviation in the estimated channel transfer functions $\hat{\mathbf{h}}_A$ and $\hat{\mathbf{h}}_B$ at both ends of the link leads to a complete mismatch in the ordering of the information bits and thus a likely loss in the code block decoding outcome at the LR 400, coded information bits are sorted prior to mapping the code blocks onto the used subcarriers:

A first coded information bit is for example mapped to a subcarrier 1 with highest channel transfer function $\hat{\mathbf{h}}_A$ power. This is the subcarrier with the highest absolute square value $|h_k|^2$.

A second coded information bit is mapped to a subcarrier 2 with second highest channel transfer function power $|h_k|^2$.

This is repeated to map further coded information bits the K subcarriers.

Note that those coded information bits already might have been interleaved before, by any other standard-defined interleaver. Optionally, another pre-defined interleaver may be used to randomize bit positions prior to sorting.

The advantage of the sorting is improved reliability for the case where the assumed mapping of modulation symbols or coded information bits to subcarriers is mismatched at the LR 400 for receiving data because of differences in the channel estimation that results in a different assumed modulation mapping. If e.g. subcarrier 1 is estimated by the LR 400 to be the weakest instead of another subcarrier estimated by the device 300 for sending data, then only these two modulation symbols are affected instead of potentially all.

Dummy signals are optionally used on all or another sub-set of the remaining M-K subcarriers in order to further obscure the transmission content. They may be generated by a random bit sequence mapped into a modulation alphabet used in the of actual data transmission to create the information bits.

4) Adaptive Modulation with sorting, channel-dependent bit loading and dummy symbols

As rate distortion theory motivates bit loading (T. Cover, J. Thomas, "Elements of Information Theory", Wiley, 2nd edition, chapter 10.3.3) this is directly usable to obfuscate the transmitted information when not explicitly signalling the bit loading. This increases the spectral efficiency.

Again, as described in the embodiment described under item 3), sorting is used in order to prevent that a single mismatch between estimated channel transfer functions $\hat{\mathbf{h}}_A$ and $\hat{\mathbf{h}}_B$ causes a reordering of many bits which would make the message not decodable for the LR 400.

To this end the strongest subcarrier in terms of absolute squares $|h_k|^2$ of $\hat{\mathbf{h}}_A$ gets assigned the first information bit, and the second strongest the second information bit. This is repeated to map further coded information bits the K subcarriers.

For example, the bit loading algorithm "Multi-antenna OFDM channel feedback compression exploiting sparsity", T. Wild, C. Hoek, G. Herzog, J. Koppenborg, European Wireless, April 2013, Guildford, UK can be adapted and used. This algorithm uses "tap power". Instead of "tap power" the subcarrier channel transfer function power is used in this example for assigning bits according to the algorithm of T. Wild et al.

The number of assigned bits determines the modulation alphabet, e.g. 1 bit: BPSK, 2 bit: QPSK, 3 bit: 8-PSK, 4 bit: 16 QAM.

Obfuscation is now effective as the eavesdropper, e.g. device 500 in Fig. 2, does not know about the used alphabet per subcarrier. When no bits are assigned, dummy symbols may be used, as described in the embodiment under item 3).

5) Additional variations in case of flat or near-flat channels:

When the propagation channel is flat or almost flat, there is no variation in the frequency domain. Therefore, some of the above described embodiments may have less effect. Of course an eavesdropper does usually not know whether the channel from A to B is flat but it could assume so, as there may be e.g. a certain line-of-sight (LOS) probability.

For such case, artificial channel variation may be introduced as described below based on non-frequency-dependent channel parameters.

Firstly, at the device 300 for transmitting the data and at the device 400 for receiving the data it is checked whether the channel is flat. This can e.g. be done by checking whether all variations of a frequency-selective channel transfer function are below a certain threshold such as 2 dB from each other or 1 dB from the average value. In case the LR 400 determines values which are just slightly exceeding the threshold it can also compute it's processing based on the hypothesis that the device 300 for transmitting the data has considered the channel to be flat.

Secondly, artificial multi-path channel behaviour is introduced. The device 300 for transmitting the data can use cyclic delay diversity (CDD) or delay diversity, where a second delayed copy of the signal is transmitted, e.g. cyclically, as well. The delay of the signal depends on another channel parameter, e.g. an instantaneous average power of the estimated channel transfer function which represents the channel gain based on fast fading, shadowing and link attenuation. E.g. the channel gain G in dB can be processed with a modulo function and the outcome times a scaling factor represents the cyclic delay. E.g. for a cyclic prefix length of $L = 4.7\mu s$ the relationship could be $((G+200) \bmod 10)*(L/10)$.

The superposition of regular signal and cyclic delay can be treated as new effective channel and this new effective channel can now be used for the device 300 for transmitting the data and for the LR 400 in data transmission intended for a modulation alteration according to any of the aforementioned items 1 to 7 or combinations thereof.

6) Frequency division duplex (FDD) systems

In FDD systems a direct channel reciprocity in terms of channel transfer function is not given. Therefore, a solution for TDD may be determined, wherein the squared absolute channel transfer function is replaced by the Fourier-transformed power delay profile. This way for example the same approach as described with respect to the embodiment under item 1) may be applied to FDD. In such case, this means that as for TDD, the long-term averaged power delay profile is, i.e. the averaged squared absolutes of the channel impulse response. This power delay profile may then be transformed into frequency domain by a Fourier transform. The resulting vector may then be used for determining the alteration.

Further remarks:

Embodiments preferably rely on channel parameters which are robust to channel estimation errors. Note that in the modulation and demodulation example above, the per-subcarrier power of the channel transfer function is used, optionally not considering very weak powers as they have typically most inaccurate estimates. For example, the phase may not be used as property of the radio channel because a fading transition through a zero may create a phase flip by 180°. Furthermore, calibration errors that may result when calibrating radio frequency chains for time division duplex reciprocity may be more visible in the phase of the channel transfer function.

In order to de-correlate the channels of transmitted modulation symbols in a multiple access scheme, a frequency-diverse structure may be used. For example, a "comb"-structure may be used, where the device 300 for sending the data of a user uses e.g. each 12th subcarrier and other devices for sending data of other users use the same comb-structure shifted by one or more subcarriers.

Such channel de-correlating multiple access structure helps to make any channel-dependent modulation alterations more independent from each other so that an eavesdropper, in an attempt to guess the alteration parameters, has more difficulties.

The above described embodiments do not relate to Multiple-Input Multiple Output (MIMO) scenarios. However, embodiments may be applied for MIMO as well. If multiple antennas are present at one or both ends of the radio channel 100, the following may in general apply: Both ends of the radio channel 100, i.e. the device 300 for transmitting data and the LR 400 have estimates of the channel transfer function **h** and access to CQI / SINR, e.g. by feedback. Hence they both compute the preferred precoding vector or matrix (PMI) and appropriate channel rank, i.e. rank indicator (RI), from a codebook. The codebook may be according to LTE standard Release 13 or may be different, e.g. having more bits. In contrast to LTE or other systems this PMI is not indicated in signals, neither in the feedback- nor in the forward-direction, as this is not required due to channel reciprocity. This further helps the obfuscation purpose and saves control overhead.

In case two or more precoding vectors appear to be equally likely, the LR 400 can compute several hypothesises in parallel. Computation of PMI can e.g. be based on choosing the precoding vector, which in combination with the estimated channel and a predefined receiver strategy, such as zero forcing (ZF) or minimum mean squared error (MMSE) receive combining, maximizes the estimated throughput.

With the given RI, PMI and the predefined receiver algorithm, e.g. MMSE, the effective single input single output (SISO) channel transfer function for each MIMO stream (indexed m) for desired subcarriers (indexed k) can be computed

$$h_{eff,k} = \mathbf{w}_{km}^H \mathbf{H}_k \mathbf{p}_{km} \, ,$$ where $\mathbf{H}_k$ is the complex-valued MIMO matrix for subcarrier k. The dimension of the matrix is the number of receive antennas times number of transmit antennas.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any sequence diagrams represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

**Claims**

1. A method of transmitting data over a radio channel comprising:

   mapping (310) at least one binary digit stream of the data to at least one data symbol stream by constellation mapping according to a first modulation scheme comprising quadrature amplitude modulation or phase-shift keying;
   modulating (320) at least one carrier signal according to a second modulation scheme comprising orthogonal frequency-division multiplexing of the at least one symbol stream; and
   modulating (330) a radio signal for the radio channel with the at least one carrier signal according to a third modulation scheme;
   wherein the method further comprises:

   determining (130) a property of the radio channel (100) from received training data;
   altering at least one of the first modulation scheme, the second modulation scheme and the third modulation scheme depending on the information about the property of the radio channel (100) in a predetermined way to form an altered radio signal including the data; and transmitting the altered radio signal over the radio channel.

2. The method according to claim 1, wherein altering at least one of the second modulation scheme and the third modulation scheme comprises changing a phase and/or an amplitude of the carrier signal or of the radio signal respectively depending on the information about the property of the radio channel (100).

3. The method according to any of the preceding claims, wherein the first modulation scheme comprises mapping sub-sets of the binary digit stream of the data to a plurality of data symbol streams by a modulation constellation to form sub-carriers, and combining the sub-carriers to form the carrier signal, and wherein altering the first modulation scheme comprises altering at least one parameter of the modulation constellation in the mapping for at least one of the plurality of sub-carriers depending on the information about the property of the radio channel (100).

4. The method according to any of the preceding claims, wherein the information about the property of the radio channel (100) comprises a transfer function of the radio channel.

5. The method according to any of the preceding claims, wherein altering at least one of the first modulation scheme and the second modulation scheme comprises changing a bit assignment for the mapping of the at least one binary digit stream of data to the at least one data symbol stream according to the first modulation scheme, and for modulating the at least one carrier signal according to the second modulation scheme respectively depending on the information about the property of the radio channel (100).

6. A method of receiving data in a radio channel comprising:

   demodulating (410) a radio signal in a radio channel (100) according to a first demodulation scheme to form at least one carrier signal;
   demodulating (420) the at least one carrier signal according to a second demodulation scheme comprising orthogonal frequency-division multiplexing to form at least one data symbol stream; and
   mapping (430) the at least one data symbol stream to at least one binary digit stream of the data by symbol detection according to a third demodulation scheme comprising quadrature amplitude modulation or phase-shift keying;
   wherein the method further comprises:

   determining (140) a property of the radio channel (100) from received training data; and
   altering at least one of the first demodulation scheme, the second demodulation scheme, and the third demodulation scheme depending on information about the property of the radio channel (100) in a predetermined way.

7. The method according to claim 6, wherein altering at least one of the second demodulation scheme and the third demodulation scheme comprises changing a phase and/or an amplitude for demodulating the carrier signal or the radio signal respectively depending on the information about the property of the radio channel (100A).

8. The method according to any of the preceding claims 6 or 7, wherein the information about the property of the radio channel (100A) comprises a transfer function of the radio channel.

9. A device (300) for transmitting data in a radio channel, the device comprising a processor (302), a memory (304) and a transmitter (306), wherein the device (300) is adapted for:

   mapping at least one binary digit stream of the data to at least one data symbol stream by constellation mapping according to a first modulation scheme comprising quadrature amplitude modulation or phase-shift keying;
   modulating at least one carrier signal according to a second modulation scheme comprising orthogonal frequency-division multiplexing of the at least one symbol stream; and
   modulating a radio signal for the radio channel (100) with the at least one carrier signal according to a third modulation scheme;
   wherein the device is further configured to:

   determine (130) a property of the radio channel (100) from received training data;
   alter at least one of the first modulation scheme, the second modulation scheme and the third modulation scheme depending on information about the property of the radio channel (100) in a predetermined way to form an altered radio signal including the data; and
   transmit the altered radio signal over the radio channel.

**10.** The device (300) according to claim 9, further configured to alter at least one of the second modulation scheme and the third modulation scheme by changing a phase and/or an amplitude of the carrier signal or of the radio signal respectively depending on the information about the property of the radio channel (100).

**11.** The device (300) according to any of the preceding claims 9 or 10, wherein the first modulation scheme comprises mapping sub-sets of the binary digit stream of the data to a plurality of data symbol streams by a modulation constellation to form sub-carriers, and combining the sub-carriers to form the carrier signal, and wherein the device is further configured to alter the first modulation scheme by altering at least one parameter of the modulation constellation in the mapping for at least one of the plurality of sub-carriers depending on the information about the property of the radio channel (100).

**12.** The device (300) according to any of the preceding claims 9 to 11, wherein the information about the property of the radio channel (100) comprises a transfer function of the radio channel.

**13.** A device (400) for receiving data over a radio channel, the device comprising a processor (402), a memory (404) and a receiver (406), wherein the device (400) is adapted for:

demodulating a radio signal in a radio channel (100) according to a first demodulation scheme to form at least one carrier signal;
demodulating the at least one carrier signal according to a second demodulation scheme comprising orthogonal frequency-division multiplexing to form at least one data symbol stream; and
mapping the at least one data symbol stream to at least one binary digit stream of the data by symbol detection according to a third demodulation scheme comprising quadrature amplitude modulation or phase-shift keying; wherein the device (400) is further configured to:

determine (140) a property of the radio channel (100) from received training data; and
alter at least one of the first demodulation scheme, the second demodulation scheme, and the third demodulation scheme depending on information about the property of the radio channel (100) in a predetermined way.

**14.** The device (400) according to claim 13, wherein the device is configured to alter at least one of the second demodulation scheme and the third demodulation scheme by changing a phase and/or an amplitude for demodulating the carrier signal or the radio signal respectively depending on the information about the property of the radio channel (100).

**15.** The device (400) according to any of the preceding claims 13 or 14, wherein the information about the property of the radio channel (100) comprises a transfer function of the radio channel.

**Amended claims in accordance with Rule 137(2) EPC.**

**1.** A method of transmitting data over a radio channel comprising:

mapping (310) at least one binary digit stream of the data to at least one data symbol stream by constellation mapping according to a first modulation scheme comprising quadrature amplitude modulation or phase-shift keying;
modulating (320) at least one carrier signal according to a second modulation scheme comprising orthogonal frequency-division multiplexing of the at least one symbol stream; and
modulating (330) a radio signal for the radio channel with the at least one carrier signal according to a third modulation scheme;
**characterized in that** the method further comprises:

determining (130) a property of the radio channel (100) from received training data;
altering at least one of the first modulation scheme, the second modulation scheme and the third modulation scheme depending on the information about the property of the radio channel (100) in a predetermined way to form an altered radio signal including the data; and transmitting the altered radio signal over the radio channel.

**2.** The method according to claim 1, wherein altering at least one of the second modulation scheme and the third modulation scheme comprises changing a phase and/or an amplitude of the carrier signal or of the radio signal respectively depending on the information about the property of the radio channel (100).

**3.** The method according to any of the preceding claims, wherein the first modulation scheme comprises mapping sub-sets of the binary digit stream of the data to a plurality of data symbol streams by a modulation constellation to form sub-carriers, and combining the sub-carriers to form the carrier signal, and wherein altering the first modulation scheme comprises altering at least one parameter of the modulation constellation in the mapping for at least one of the plurality of sub-carriers depending on the information about the property of the radio channel (100).

**4.** The method according to any of the preceding claims, wherein the information about the property of the radio channel (100) comprises a transfer function of the radio channel.

**5.** The method according to any of the preceding claims, wherein altering at least one of the first modulation scheme and the second modulation scheme comprises changing a bit assignment for the mapping of the at least one binary digit stream of data to the at least one data symbol stream according to the first modulation scheme, and for modulating the at least one carrier signal according to the second modulation scheme respectively depending on the information about the property of the radio channel (100).

**6.** A method of receiving data in a radio channel comprising:

demodulating (410) a radio signal in a radio channel (100) according to a first demodulation scheme to form at least one carrier signal;
demodulating (420) the at least one carrier signal according to a second demodulation scheme comprising orthogonal frequency-division multiplexing to form at least one data symbol stream; and
mapping (430) the at least one data symbol stream to at least one binary digit stream of the data by symbol detection according to a third demodulation scheme comprising quadrature amplitude modulation or phase-shift keying;
**characterized in that** the method further comprises:

determining (140) a property of the radio channel (100) from received training data; and
altering at least one of the first demodulation scheme, the second demodulation scheme, and the third demodulation scheme depending on information about the property of the radio channel (100) in a predetermined way.

**7.** The method according to claim 6, wherein altering at least one of the second demodulation scheme and the third demodulation scheme comprises changing a phase and/or an amplitude for demodulating the carrier signal or the radio signal respectively depending on the information about the property of the radio channel (100A).

**8.** The method according to any of the preceding claims 6 or 7, wherein the information about the property of the radio channel (100A) comprises a transfer function of the radio channel.

**9.** A device (300) for transmitting data in a radio channel, the device comprising a processor (302), a memory (304) and a transmitter (306), wherein the device (300) is adapted for:

mapping at least one binary digit stream of the data to at least one data symbol stream by constellation mapping according to a first modulation scheme comprising quadrature amplitude modulation or phase-shift keying;
modulating at least one carrier signal according to a second modulation scheme comprising orthogonal frequency-division multiplexing of the at least one symbol stream; and
modulating a radio signal for the radio channel (100) with the at least one carrier signal according to a third modulation scheme;
**characterized in that** the device is further configured to:

determine (130) a property of the radio channel (100) from received training data;
alter at least one of the first modulation scheme, the second modulation scheme and the third modulation scheme depending on information about the property of the radio channel (100) in a predetermined way to form an altered radio signal including the data; and
transmit the altered radio signal over the radio channel.

**10.** The device (300) according to claim 9, further configured to alter at least one of the second modulation scheme and the third modulation scheme by changing a phase and/or an amplitude of the carrier signal or of the radio signal respectively depending on the information about the property of the radio channel (100).

**11.** The device (300) according to any of the preceding claims 9 or 10, wherein the first modulation scheme comprises mapping sub-sets of the binary digit stream of the data to a plurality of data symbol streams by a modulation constellation to form sub-carriers, and combining the sub-carriers to form the carrier signal, and wherein the device is further configured to alter the first modulation scheme by altering at least one parameter of the modulation constellation in the mapping for at least one of the plurality of sub-carriers depending on the information about the property of the radio channel (100).

**12.** The device (300) according to any of the preceding claims 9 to 11, wherein the information about the property of the radio channel (100) comprises a transfer function of the radio channel.

**13.** A device (400) for receiving data over a radio channel, the device comprising a processor (402), a memory (404) and a receiver (406), wherein the device (400) is adapted for:

demodulating a radio signal in a radio channel (100) according to a first demodulation scheme to form at least one carrier signal;
demodulating the at least one carrier signal according to a second demodulation scheme comprising orthogonal frequency-division multiplexing to form at least one data symbol stream; and
mapping the at least one data symbol stream to at least one binary digit stream of the data by symbol detection according to a third demodulation scheme comprising quadrature amplitude modulation or phase-shift keying; **characterized in that** the device (400) is further configured to:

determine (140) a property of the radio channel (100) from received training data; and
alter at least one of the first demodulation scheme,
the second demodulation scheme, and the third demodulation scheme depending on information about the property of the radio channel (100) in a predetermined way.

**14.** The device (400) according to claim 13, wherein the device is configured to alter at least one of the second demodulation scheme and the third demodulation scheme by changing a phase and/or an amplitude for demodulating the carrier signal or the radio signal respectively depending on the information about the property of the radio channel (100).

**15.** The device (400) according to any of the preceding claims 13 or 14, wherein the information about the property of the radio channel (100) comprises a transfer function of the radio channel.

Fig. 1

```
┌──────────┐                              ┌──────────┐
│ Sender   │              100             │   LR     │
│  300     │                              │  400     │
└──────────┘                              └──────────┘
     │                   110                    │
     │◄─────────────────────────────────────────│
     │                   120                    │
     │─────────────────────────────────────────►│
     │                                          │
┌──────────┐                              ┌──────────┐
│  130     │                              │  140     │
└──────────┘                              └──────────┘
     │                                          │
┌──────────┐                              ┌──────────┐
│  150     │                              │  160     │
└──────────┘                              └──────────┘
     │                                          │
```

Fig. 2

```
┌──────────────────────────────────────────┐
│   Map at least one binary digit data      │  ⌇310
│   stream to at least one symbol stream     │
└──────────────────────────────────────────┘
                    │
                    ▼
┌──────────────────────────────────────────┐
│   Perform orthogonal frequency-division    │
│   multiplexing of at least one symbol      │  ⌇320
│   stream to obtain at least one carrier    │
│   signal                                   │
└──────────────────────────────────────────┘
                    │
                    ▼
┌──────────────────────────────────────────┐
│   Modulate a radio signal with the         │  ⌇330
│   at least one carrier signal              │
└──────────────────────────────────────────┘
```

Fig. 3

Demodulate a radio signal to form at least one carrier signal — 410

Demodulate the at least one carrier signal to form at least one data symbol stream — 420

Map the at least one data symbol stream to at least one binary digit data stream — 430

Fig. 4

302    304                    402    404

300    400

308    406

100

306    600'    600    408

600'    500

Fig. 5

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/110320 A1 (SONY CORP [JP]; STADELMEIER LOTHAR [DE]; SCHWAGER ANDREAS [DE]; SCHNEI) 15 September 2011 (2011-09-15) * figures 1, 3a, 4b * * page 1, paragraph 1 * * page 5, line 16 - page 11, line 28 * ----- | 1-15 | INV. H04W12/02 H04L1/00 H04L27/34 |
| X | WO 2013/064835 A2 (UNIV EDINBURGH [GB]) 10 May 2013 (2013-05-10) * page 13, paragraph 2 * * page 24, line 14 - line 22 * * page 46, line 24 - page 74, line 12 * ----- | 1-15 | |
| A | WO 2013/174408 A1 (ERICSSON TELEFON AB L M [SE]; OLSSON BENGT-ERIK [SE]; LARSSON CHRISTIN) 28 November 2013 (2013-11-28) * page 6, last paragraph - page 12, line 19 * * claim 1 * * figure 2 * ----- | 1-15 | |

TECHNICAL FIELDS
SEARCHED (IPC)

H04W
H04L

The present search report has been drawn up for all claims

| Place of search | Date of completion of the search | Examiner |
|---|---|---|
| Munich | 28 June 2017 | Martínez Cebollada |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

......................................................................

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 17 15 6223

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2017

| Patent document cited in search report | | Publication date | Patent family member(s) | | Publication date |
|---|---|---|---|---|---|
| WO 2011110320 | A1 | 15-09-2011 | AR | 080362 A1 | 04-04-2012 |
| | | | CN | 102792596 A | 21-11-2012 |
| | | | EP | 2545651 A1 | 16-01-2013 |
| | | | KR | 20130014502 A | 07-02-2013 |
| | | | TW | 201210273 A | 01-03-2012 |
| | | | US | 2013039397 A1 | 14-02-2013 |
| | | | WO | 2011110320 A1 | 15-09-2011 |
| WO 2013064835 | A2 | 10-05-2013 | EP | 2774287 A2 | 10-09-2014 |
| | | | GB | 2496379 A | 15-05-2013 |
| | | | JP | 2014533030 A | 08-12-2014 |
| | | | US | 2013126713 A1 | 23-05-2013 |
| | | | WO | 2013064835 A2 | 10-05-2013 |
| WO 2013174408 | A1 | 28-11-2013 | CN | 104321991 A | 28-01-2015 |
| | | | EP | 2856678 A1 | 08-04-2015 |
| | | | US | 2015139658 A1 | 21-05-2015 |
| | | | WO | 2013174408 A1 | 28-11-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JUNJIE YANG.** A Semiblind Two-Way Training Method for Discriminatory Channel Estimation in MIMO Systems. *IEEE Transactions on Communications,* July 2014, vol. 62 (7), 2400-2410
- **Y.S. SHIU.** Physical layer security in wireless networks: a tutorial. *IEEE Wireless Communications,* April 2011, vol. 18 (2), 66-74
- **T. COVER ; J. THOMAS.** Elements of Information Theory. Wiley
- **T. WILD ; C. HOEK ; G. HERZOG ; J. KOPPENBORG.** Multi-antenna OFDM channel feedback compression exploiting sparsity. *European Wireless,* April 2013